# EUROPEAN PATENT SPECIFICATION

(11) **EP 3 399 500 B1**
(45) Date of publication and mention of the grant of the patent: **11.09.2019**
(21) Application number: 17382244.6
(22) Date of filing: 03.05.2017
(51) Int. Cl.: G06T 7/12, G06T 7/254

(54) **METHOD AND SYSTEM FOR CALCULATING THE TRAJECTORY OF A STORE EJECTED FROM AN AIRCRAFT**
VERFAHREN UND SYSTEM ZUR BERECHNUNG DER FLUGBAHN VON AUS EINEM FLUGZEUG AUSGESTOSSENEN VORRAT
PROCÉDÉ ET SYSTÈME PERMETTANT DE CALCULER LA TRAJECTOIRE D'UNE CHARGE EXTERNE ÉJECTÉE À PARTIR D'UN AÉRONEF

(43) Date of publication of application: 07.11.2018
(73) Proprietor: Airbus Defence and Space, S.A.U., 28906 Getafe - Madrid (ES)
(72) Inventor: LOPEZ HERREROS, Israel, 28906 Getafe (Madrid) (ES); COLL HERRERO, Francisca, 28906 Getafe (Madrid) (ES)
(74) Representative: Herrero & Asociados, S.L.

(56) References cited:
- CHUANTAO ZANG ET AL: "A visual tracking strategy using Computer Graphics and edge", ROBOTICS AND BIOMIMETICS (ROBIO), 2011 IEEE INTERNATIONAL CONFERENCE ON, IEEE, 7 December 2011 (2011-12-07), pages 981-986, XP032165913, DOI: 10.1109/ROBIO.2011.6181415 ISBN: 978-1-4577-2136-6
- CIPOLLA R ET AL: "Real-time visual tracking of complex structures", IEEE TRANSACTIONS ON PATTERN ANALYSIS AND MACHINE INTELLIGENCE, IEEE COMPUTER SOCIETY, USA, vol. 24, no. 7, 1 July 2002 (2002-07-01), pages 932-946, XP011094540, ISSN: 0162-8828, DOI: 10.1109/TPAMI.2002.1017620
- FEDDEMA J T ET AL: "VISION-GUIDED SERVOING WITH FEATURE-BASED TRAJECTORY GENERATION", IEEE TRANSACTIONS ON ROBOTICS AND AUTOMATION, IEEE INC, NEW YORK, US, vol. 5, no. 5, 1 October 1989 (1989-10-01) , pages 691-700, XP000174490, ISSN: 1042-296X, DOI: 10.1109/70.88086
- COMPORT A I ET AL: "Robust model-based tracking for robot vision", INTELLIGENT ROBOTS AND SYSTEMS, 2004. (IROS 2004). PROCEEDINGS. 2004 I EEE/RSJ INTERNATIONAL CONFERENCE ON SENDAI, JAPAN 28 SEPT.-2 OCT., 2004, PISCATAWAY, NJ, USA,IEEE, PISCATAWAY, NJ, USA, vol. 1, 28 September 2004 (2004-09-28), pages 692-697, XP010765439, DOI: 10.1109/IROS.2004.1389433 ISBN: 978-0-7803-8463-7
- HAKER S ET AL: "Missile tracking using knowledge-based adaptive thresholding", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, vol. 1, 7 October 2001 (2001-10-07), pages 786-789, XP010564977, DOI: 10.1109/ICIP.2001.959163 ISBN: 978-0-7803-6725-8
- KOICHI HASHIMOTO: "A review on vision-based control of robot manipulators", ADVANCED ROBOTICS, vol. 17, no. 10, 1 January 2003 (2003-01-01), pages 969-991, XP055286674, NL ISSN: 0169-1864, DOI: 10.1163/156855303322554382

## Description

### Object of the invention

The present invention refers to a method and a system for calculating the trajectory of a store ejected from an aircraft in order to ensure a safe separation distance when the store is ejected and enters free flight.

One object of the present invention is to provide a fully automated method and system for calculating the trajectory of a store ejected from an aircraft that saves cost and time, and avoids human errors.

Another object of the invention is to provide a method and system more accurate in the calculation of the trajectory followed by a store ejected from an aircraft.

It is a further object of the invention to provide a method and system for calculating the trajectory of a store ejected from an aircraft that complies with international airworthiness authorities' regulations to guarantee safe separation of an ejected store.

### Background of the invention

Actually the calculation of the trajectory of a store ejected from an aircraft is obtained applying photogrammetry techniques to the video signal films extracted from on-board high speed cameras (HSC).

This method of calculation requires the use of one camera for capturing medium size stores, such as GBUs (Guided Bomb Units) or missiles, or the use of two cameras for capturing small objects, such as flares. These cameras are capable of capturing six degree-of-freedom information.

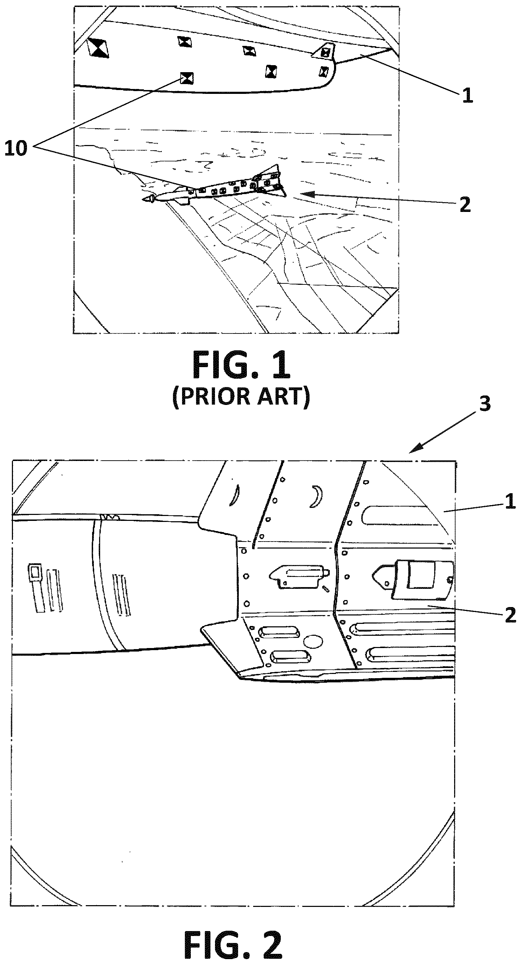

The method requires the use of stickers, which are placed on both the store and determined parts of the aircraft from where a view can be obtained from the cameras. Figure 1 shows these stickers (10) placed on both the ejected store (2) and the aircraft (1).

Positioning stickers on the store is a costly process, since sensitive stores cannot be freely transported, and qualified people has to travel to the ubication of the store.

Further, stickers have to be digitized to keep control of their positions, and thus be able to obtain the store trajectory when it is ejected from the aircraft. This digitization is a manual process, subjected to human errors. Also, this digitization is a time consuming task, and increases the overall cost of the actual method.

Having the stickers digitized and positioned in the store, an operator has to locate them in the frames captured by the on-board cameras. This location is manually performed, and is thus subject to human interpretation. Based on this information, and on the information provided by a tachymeter capable of measuring the exact coordinate of the stickers with respect to aircraft reference systems, the trajectory of a store ejected from an aircraft can be calculated.

Chuantao Zang et al ("A visual tracking strategy using Computer Graphics and edge", ROBOTICS AND BIOMIMETICS (ROBIO), 2011 IEEE INTERNATIONAL CONFERENCE ON, IEEE, 7 December 2011 (2011-12-07), pages 981-986) describe a visual tracking strategy for 3D object recognition and tracking in robot vision applications, adopting a Coarse-to-Fine combination strategy for 3D object tracking.

It would therefore be desirable to provide technical means that are able to reduce the time, the cost, and the human errors derived from the currently existing method.

### Summary of the invention

The present invention overcomes the above mentioned drawbacks by providing a method and system for calculating the trajectory of a store ejected from an aircraft that saves time and cost, and avoids human errors by providing a fully automated process for calculating the trajectory of an ejected store.

One aspect of the present invention refers to a method for calculating the trajectory of a store ejected from an aircraft. The method comprises providing a camera at a known spatial and angular position installed on an aircraft from where images of an ejected store can be obtained. The camera provides a video signal formed by frames from which several images of the ejected store (real images) can be retrieved. The camera has intrinsic calibration parameters, such as focal distance, aberrations, center point...etc. which characterize the camera lens. These parameters will be taken into account in the method to accurately reproduce the characteristics of the ejected store images.

Further, the method comprises providing a 3D store model at an initially known spatial and angular position of the store. The geometry of the store is thus known and 3D information can be retrieved when processed. The initial spatial and angular position of the store is provided as starting point of the trajectory of the ejected store.

Following, one frame of the video signal of the camera is selected to obtain one real image (ejected store image). After, the real image is processed to get its contours, thus obtaining a processed real image (processed ejected store image).

Once the processed real image is obtained, one 3D synthetic image for each possible motion (six degrees of freedom) of the ejected store with respect to the same reference axes of camera and store positions is generated. For this generation camera and store spatial and angular positions, camera calibration parameters, the selected frame of the camera, and the 3D store model are considered.

Each 3D synthetic image is processed to obtain the store contour, and thus obtaining processed 3D synthetic images.

The processed real image is matched with each one of the processed 3D synthetic images, and the best matching processed 3D synthetic image is selected. Both images (real image and 3D synthetic image) have been processed to obtain their contours. This saves processing time, and allows the matching to be performed considering the entire geometry of the store.

The spatial and angular position of the selected processed 3D synthetic image is obtained and recorded to obtain one point of the store trajectory.

Then, the spatial and angular position of the store is updated from the spatial and angular position of the store in the selected processed 3D synthetic image.

After that, another frame of the camera is selected to obtain another (new) real image. The method returns to the point from which one real image is selected to obtain another point of the store trajectory until an established stop condition is reached.

The above mentioned method is a fully automatic method, which apart from saving time, and cost, avoids human interaction, reducing potential errors and thus obtaining a more accurate trajectory of the ejected store.

Another aspect of the invention refers to a system for calculating the trajectory of a store ejected from an aircraft, comprising a camera and processing means.

The camera is located at a known spatial and angular position of an aircraft from where images of an ejected store can be obtained. The camera provides a video signal formed by frames, and has intrinsic calibration parameters.

The processing means are configured for providing a 3D store model at an initially known spatial and angular position of the store; selecting one frame of the video signal of the camera to obtain one real image; obtaining the contours of the real image to obtain a processed real image; generating, from the camera and store spatial and angular positions, the camera calibration parameters, the selected frame of the camera, and the 3D store model, one 3D synthetic image for each possible motion of the ejected store with respect to the same reference axes of camera and store positions; obtaining the store contour from each one of the 3D synthetic images to obtain processed 3D synthetic images; matching the processed real image with each one of the processed 3D synthetic images; selecting the best matching processed 3D synthetic image; obtaining and recording both the spatial and angular position of the selected processed 3D synthetic image to obtain one point of the store trajectory; updating the spatial and angular position of the store from the spatial and angular position of the store in the selected processed 3D synthetic image; and selecting another frame of the camera to obtain another (new) real image, and return to the point from which one real image is selected to obtain another point of the store trajectory until an established stop condition is reached.

The above mentioned system saves time and cost, and avoids human errors that conventionally occurred with the use of stickers.

Avoiding stickers' management (placing, digitalization, computer location...), time and cost are considerably reduced. The method based on stickers is manual and requires a user to identify each one of the digitized stickers in each camera frame. Providing a fully automatic system, the invention reduces errors and provides a more accurate calculation of the trajectory of the ejected store.

The accuracy of the calculated trajectory is further increased by the use of the entire geometry of the store, instead of the use of the centre of the stickers. In the conventionally used photogrammetry method, stickers become very small when the store moves away, and visually spotting their centres in the computer became difficult and imprecise.

### Brief description of the drawings

For a better comprehension of the invention, the following drawings are provided for illustrative and non-limiting purposes, wherein:
Figure 1 shows the stickers placed on both an ejected store and a part of an aircraft according to the state of the art method.
Figure 2 shows an initial real image, obtained from one frame of the video signal of an on-board camera.
Figure 3 shows a processed real image in which the contours of the real image have been obtained.
Figure 4 shows one 3D synthetic image for one of the possible motions of the ejected store.
Figure 5 shows a processed 3D synthetic image in which the contours of the 3D synthetic image have been obtained.
Figure 6 shows the best matching processed 3D synthetic image.
Figure 7 shows the xyz aircraft reference axes, and the roll, pitch, and yaw aircraft reference angles.
Figure 8 shows a graphic comparing the theoretical (real) and calculated x-coordinate trajectory of an ejected store during a number of frames.
Figure 9 shows a graphic comparing the theoretical (real) and calculated y-coordinate trajectory of an ejected store during a number of frames.
Figure 10 shows a graphic comparing the theoretical (real) and calculated z-coordinate trajectory of an ejected store during a number of frames.
Figure 11 shows a graphic comparing the theoretical (real) and calculated roll trajectory of an ejected store during a number of frames.
Figure 12 shows a graphic comparing the theoretical (real) and calculated pitch trajectory of an ejected store during a number of frames.
Figure 13 shows a graphic comparing the theoretical (real) and calculated yaw trajectory of an ejected store during a number of frames.

### Preferred embodiments of the invention

Figures 2 to 6 shows different images of the method for calculating the trajectory of an ejected store according to the invention.

The method comprises providing a camera at a known spatial and angular position of an aircraft (1) from where images of an ejected store (2) can be obtained. The camera provides a video signal formed by frames containing real images (3). The camera has intrinsic calibration parameters that will be applied in the generation of the 3D synthetic images to provide more precise synthetic images.

According to the method, each one of the frames of the video signal of the camera is selected to obtain one real image (3). Figure 2 shows an example of a real image (3).

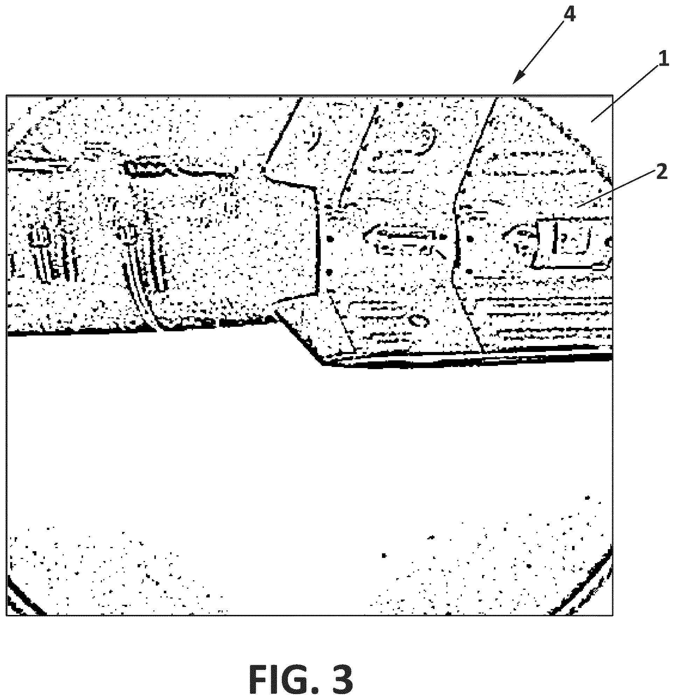

After, the real image (3) is processed to obtain the image contours. With that, a processed real image (4) is obtained. Figure 3 shows this processed real image (4).

In addition to real images (3, 4), the method requires the use of 3D synthetic images. For that, the 3D store model and its initial spatial and angular position have to be known and provided to the method.

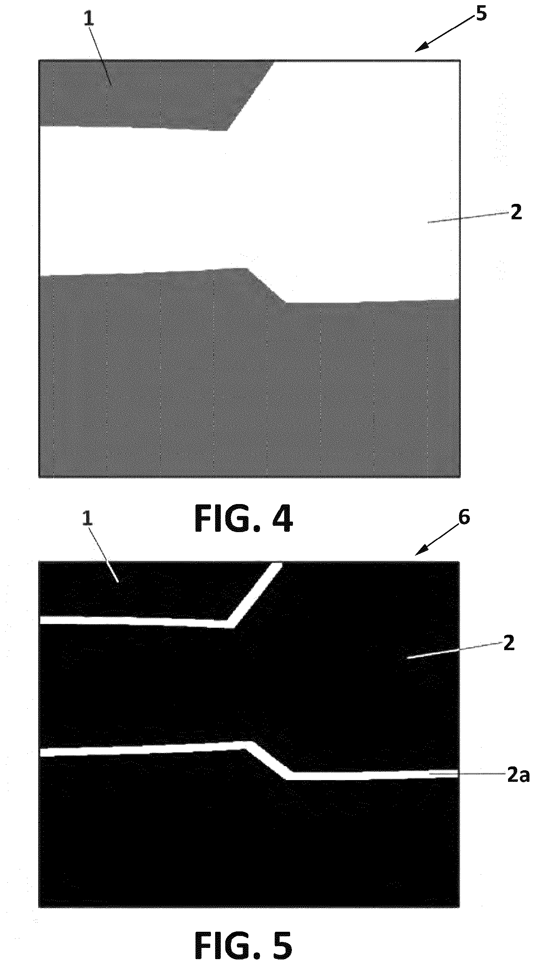

For the generation of 3D synthetic images (5), the method requires camera and store spatial and angular positions, the camera calibration parameters, the selected frame of the camera, and the 3D store model. With that, one 3D synthetic image (5) for each possible motion of the ejected store with respect to the same reference axes (8, 9) of camera and store positions is generated. Figure 4 shows one of these generated 3D synthetic images (5).

After, each one of the 3D synthetic images (5) is processed to obtain the store contour (2a). With that, processed 3D synthetic images (6) are obtained. Figure 5 shows one of these processed 3D synthetic images (6).

Then, each one of the processed 3D synthetic images (6) is matched with the processed real image (4), and the best matching processed 3D synthetic image (7) is selected.

Matching is based on image contours. This saves processing time at the same time that provides complete information of the geometry of the store.

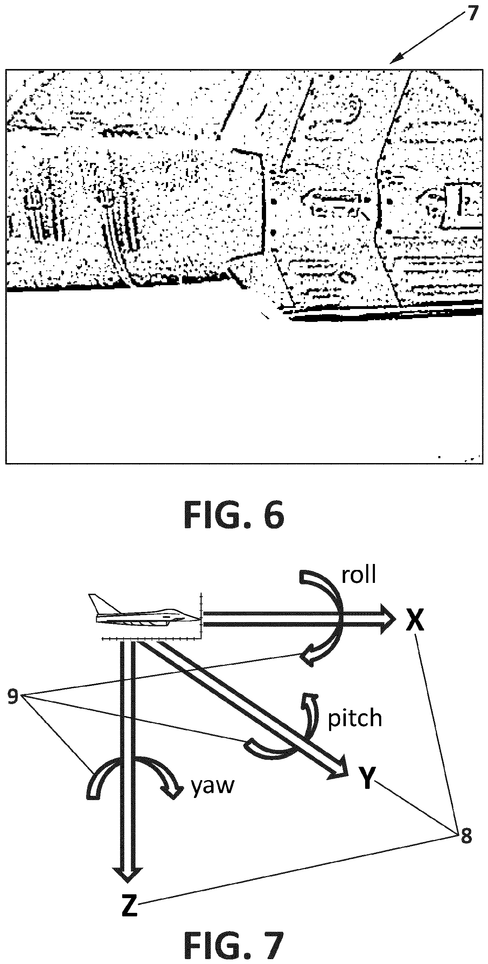

The spatial and angular position of the selected (best matching) processed 3D synthetic image (7) is obtained and recorded to obtain one point of the store trajectory. Figure 6 shows this best matching processed 3D synthetic image (7).

After that, the spatial and angular position of the store (2) is updated from the spatial and angular position of the selected processed 3D synthetic image (7). Another frame of the camera is selected to obtain a new real image (3), and the method returns to the point from which one real image is selected to obtain another point of the store trajectory until an established stop condition is reached.

According to a preferred embodiment, the stop condition is reached when the number of analyzed frames corresponds to a separation of 5 - 6 m of the store with respect to the aircraft. This number of analyzed frames depends on the camera parameters, which usually provides 100 - 200 frames per second, and the theoretical trajectory of the store.

According to another preferred embodiment, matching each one of the processed 3D synthetic images (6) with the processed real image (4) comprises subtracting the processed real image (4) from each one of the obtained processed 3D synthetic image (6), and selecting the best matching processed 3D synthetic image (7) comprises selecting the processed 3D synthetic image (6) whose subtraction with the processed real image (4) has obtained a minimum number of differential pixels.

According to another preferred embodiment, obtaining the contours of the real image (3) and obtaining the store contour (2a) from each one of the generated 3D synthetic images (5) comprises converting said both real image (3) and 3D synthetic image (5) in black and white images wherein contour pixels are set in white and the remained pixels of the image are set in black, and wherein selecting the best matching processed 3D synthetic image (7) comprises selecting the processed 3D synthetic image (6) whose subtraction with the processed real image (4) has obtained a minimum number of white pixels.

Figure 7 shows the xyz aircraft reference axes (8), and the roll, pitch, and yaw aircraft reference angles (9).

Preferably, the camera and store spatial positions are referred to xyz aircraft reference axes (8), and the camera and store angular positions are referred to roll, pitch, and yaw aircraft reference axes (9).

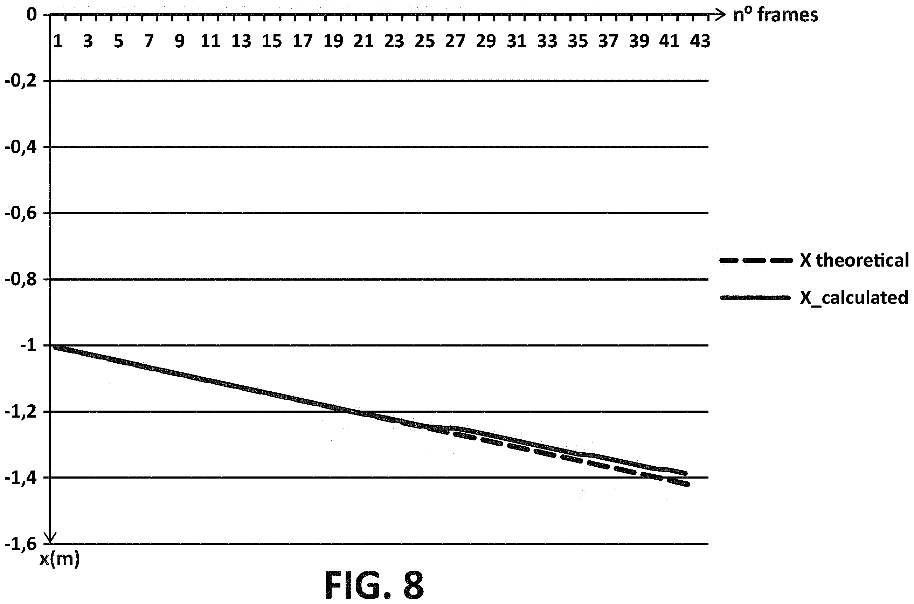

Figures 8 to 13 show the trajectory calculated by the method of the invention in a continuous line, and the theoretical (real) trajectory followed by the ejected store in a dashed line.

Figure 8 shows a graphic comparing the theoretical (real) and the calculated x-coordinate trajectory of an ejected store during 40 frames. As shown, the calculated trajectory is almost the same as the theoretical trajectory. The differences in the x reference axis are:
Maximum: 0,030723m, Average: 0,009199m

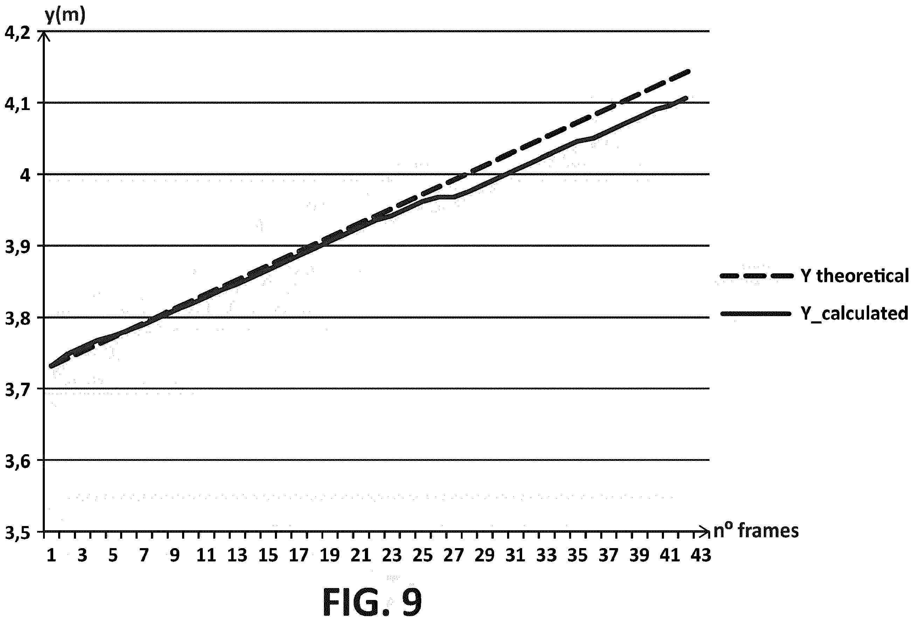

Figure 9 shows a graphic comparing the theoretical (real) and the calculated y-coordinate trajectory of an ejected store during 40 frames. As shown, the calculated trajectory is almost the same as the theoretical trajectory during the course of the first 25 frames. After that, a small difference appears. The differences in the y reference axis are:
Maximum: 0,03607m, Average: 0,014485m

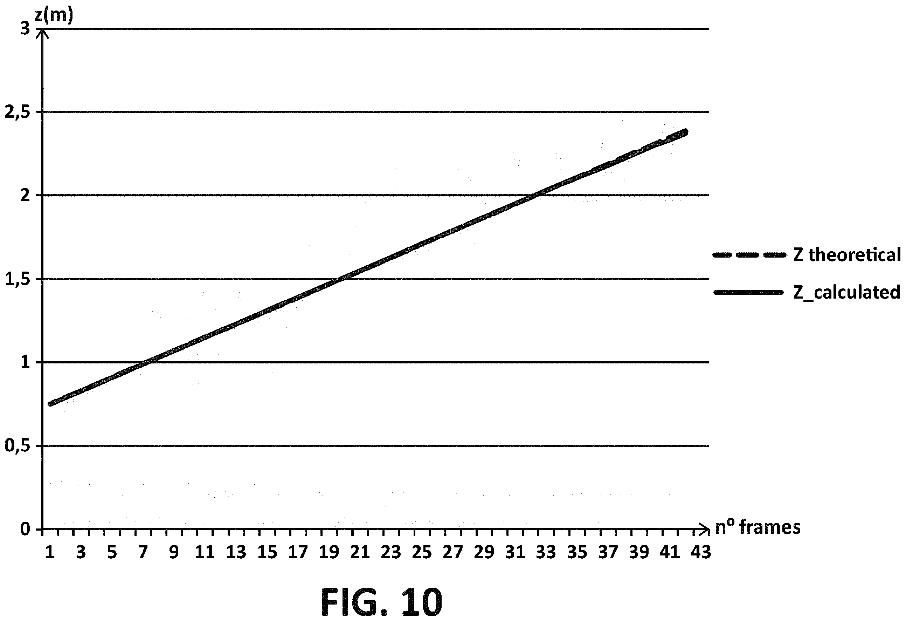

Figure 10 shows a graphic comparing the theoretical (real) and the calculated z- coordinate trajectory of an ejected store during 40 frames. As shown, the calculated trajectory is almost the same as the theoretical trajectory. The differences in the z reference axis are:
Maximum: 0,016379m, Average: 0,002093m

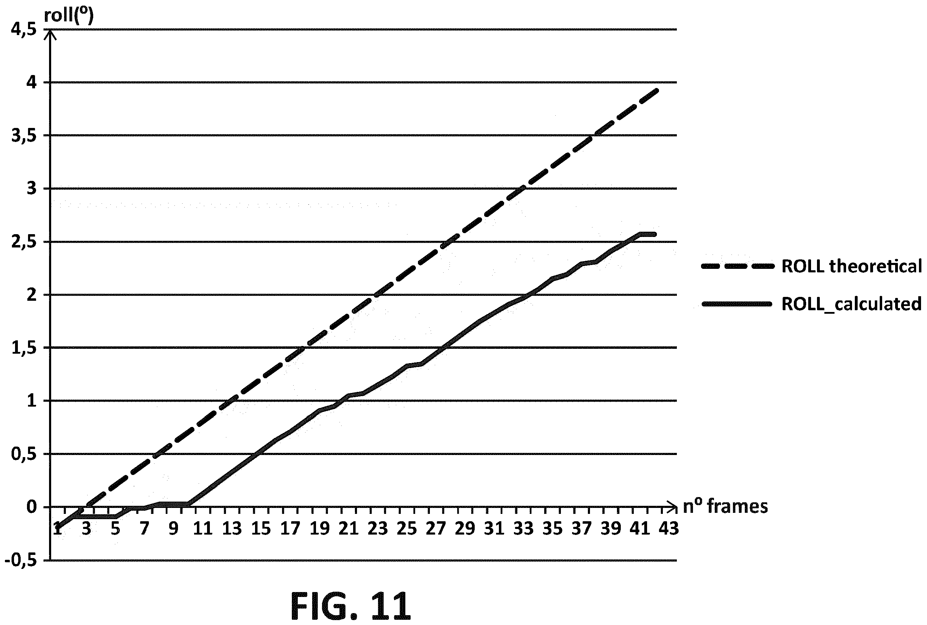

Figure 11 shows a graphic comparing the theoretical (real) and the calculated roll trajectory of an ejected store during 40 frames. As shown, the calculated trajectory is almost the same as the theoretical trajectory. The differences in the roll reference angle are:
Maximum: 1,339979°, Average: 0,776648°

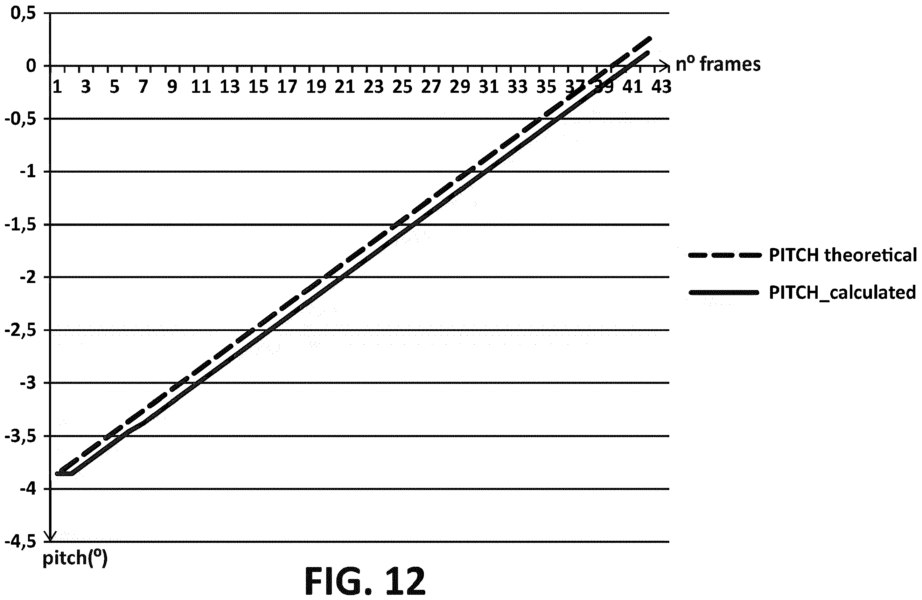

Figure 12 shows a graphic comparing the theoretical (real) and the calculated pitch trajectory of an ejected store during 40 frames. As shown, the calculated trajectory is almost the same as the theoretical trajectory. The differences in the pitch reference angle are:
Maximum: 0,119718136°, Average: 0,114493463°

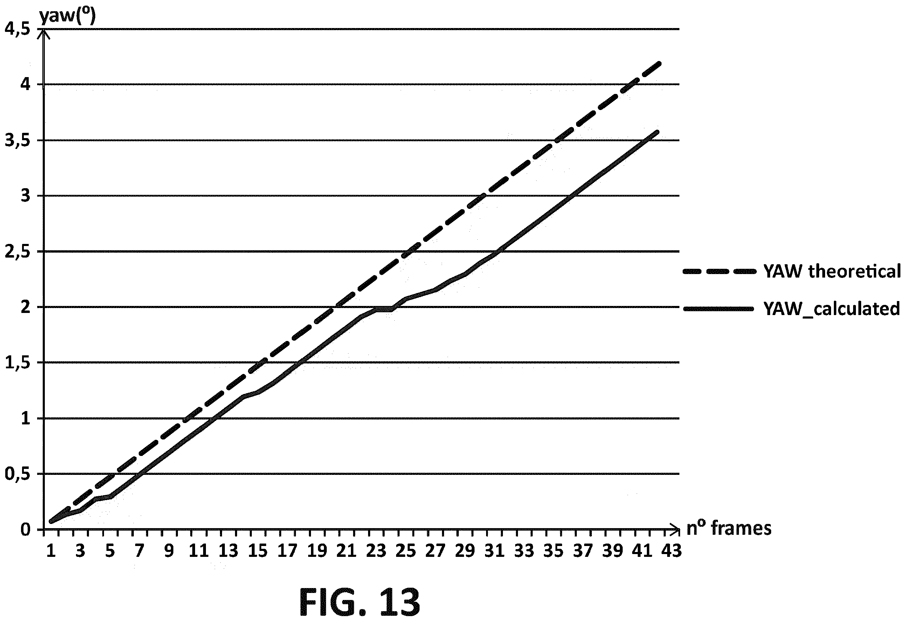

Figure 13 shows a graphic comparing the theoretical (real) and the calculated yaw trajectory of an ejected store during 40 frames. As shown, the calculated trajectory is almost the same as the theoretical trajectory. The differences in the yaw reference angle are:
Maximum: 0,600829°, Average: 0,359876°

As seen, the method of the invention provides a very accurate calculation of the trajectory of an ejected store.

## Claims

1. A method for calculating the trajectory of a store (2) ejected from an aircraft (1), comprising the following steps:
a) providing a camera at a known spatial and angular position of an aircraft (1) from where images of an ejected store (2) can be obtained, said camera providing a video signal formed by frames, and having intrinsic calibration parameters,
b) providing a 3D store model at an initially known spatial and angular position of the store (2),
c) selecting one frame of the video signal of the camera to obtain one real image (3),
d) obtaining the contours of the real image (3) to obtain a processed real image (4),
e) generating, from the camera and store spatial and angular positions, the camera calibration parameters, the selected frame of the camera, and the 3D store model, one 3D synthetic image (5) for each possible motion of the ejected store with respect to the same reference axes (8, 9) of camera and store positions,
f) obtaining the store contour (2a) from each one of the 3D synthetic images (5) to obtain processed 3D synthetic images (6),
g) matching each one of the processed 3D synthetic images (6) with the processed real image (4),
h) selecting the best matching processed 3D synthetic image (7),
i) obtaining and recording both the spatial and angular position of the selected processed 3D synthetic image (7) to obtain one point of the store trajectory,
j) updating the spatial and angular position of the store (2) from the spatial and angular position of the store in the selected processed 3D synthetic image (7),
k) selecting another frame of the camera to obtain another real image (3), and return to d) until an established stop condition is reached.

2. A method for calculating the trajectory of a store (2) ejected from an aircraft (1), according to claim 1, wherein matching each one of the processed 3D synthetic images (6) with the processed real image (4) comprises subtracting the processed real image (4) from each one of the obtained processed 3D synthetic image (6), and wherein selecting the best matching processed 3D synthetic image (7) comprises selecting the processed 3D synthetic image (6) whose subtraction with the processed real image (4) has obtained a minimum number of differential pixels.

3. A method for calculating the trajectory of a store (2) ejected from an aircraft (1), according to any of the preceding claims, wherein obtaining the contours of the real image (3) and obtaining the store contour (2a) from each one of the generated 3D synthetic images (5) comprises converting said both real image (3) and 3D synthetic image (5) in black and white images wherein contour pixels are set in white and the remained pixels of the image are set in black, and wherein selecting the best matching processed 3D synthetic image (7) comprises selecting the processed 3D synthetic image (6) whose subtraction with the processed real image (4) has obtained a minimum number of white pixels.

4. A method for calculating the trajectory of a store (2) ejected from an aircraft (1), according to any of the preceding claims, wherein the camera and store spatial positions are referred to xyz aircraft reference axes (8), and wherein the camera and store angular positions are referred to roll, pitch, and yaw aircraft reference angles (9).

5. A system for calculating the trajectory of a store (2) ejected from an aircraft (1), comprising:
• a camera located at a known spatial and angular position of an aircraft (1) from where images of an ejected store (2) can be obtained, the camera providing a video signal formed by frames, and having intrinsic calibration parameters,
• processing means configured for:
I) providing a 3D store model at an initially known spatial and angular position of the store (2),
m) selecting one frame of the video signal of the camera to obtain one real image (3),
n) obtaining the contours of the real image (3) to obtain a processed real image (4),
o) generating, from the camera and store spatial and angular positions, the camera calibration parameters, the selected frame of the camera, and the 3D store model, one 3D synthetic image (5) for each possible motion of the ejected store with respect to the same reference axes (8, 9) of camera and store positions,
p) obtaining the store contour (2a) from each one of the 3D synthetic images (5) to obtain processed 3D synthetic images (6),
q) matching each one of the processed 3D synthetic images (6) with the processed real image (4),
r) selecting the best matching processed 3D synthetic image (7),
s) obtaining and recording both the spatial and angular position of the selected processed 3D synthetic image (7) to obtain one point of the store trajectory,
t) updating the spatial and angular position of the store (2) from the spatial and angular position of the store in the selected processed 3D synthetic image (7),
u) selecting another frame of the camera to obtain another real image (3), and return to n) until an established stop condition is reached.

6. A system for calculating the trajectory of a store (2) ejected from an aircraft (1), according to claim 5, wherein the processing means are further configured for:
- subtracting the processed real image (4) from each processed 3D synthetic image (6), when matching the processed real image (4) with each processed 3D synthetic filtered image (6), and
- selecting the processed 3D synthetic image (6) whose subtraction with the processed real image (4) has obtained a minimum number of differential pixels, when selecting the best matching processed 3D synthetic image (7).

7. A system for calculating the trajectory of a store (2) ejected from an aircraft (1), according to any of claims 5 and 6, wherein the processing means are further configured for:
- converting both the real image (3) and the 3D synthetic images (5) in black and white images wherein contour pixels are set in white and the remained pixels of the image are set in black, when obtaining the contours of the real image (3) and the store contour (2a) of each one of the 3D synthetic images (5), and
- selecting the processed 3D synthetic image (6) whose subtraction with the processed real image (4) obtained a minimum number of white pixels, as the best matching processed 3D synthetic image (7).

8. A system for calculating the trajectory of a store (2) ejected from an aircraft (1), according to any claims 5 to 7, wherein the camera and store spatial positions are referred to xyz aircraft reference axes (8), and wherein the camera and store angular positions are referred to roll, pitch, and yaw aircraft reference angles (9).

## Patentansprüche

1. Verfahren zur Berechnung der Flugbahn eines aus einem Flugzeug (1) abgeworfenen Vorrats (2) mit folgenden Schritten:
a) Bereitstellen einer Kamera an einer bekannten Raum- und Winkelposition eines Flugzeugs (1), von wo aus Bilder eines abgeworfenen Vorrats (2) erhalten werden können, wobei die Kamera ein aus Einzelbildern gebildetes Videosignal liefert und intrinsische Kalibrierungsparameter aufweist,
b) Bereitstellen eines 3D-Vorratsmodells an einer ursprünglich bekannten Raum- und Winkelposition des Vorrats (2),
c) Auswählen eines Einzelbildes des Videosignals der Kamera, um ein reelles Bild (3) zu erhalten,
d) Erhalten der Konturen des reellen Bildes (3), um ein verarbeitetes reelles Bild (4) zu erhalten,
e) Erzeugen eines synthetischen 3D-Bildes (5), aus den Raum- und Winkelpositionen der Kamera und des Vorrats, den Kamerakalibrierungsparametern, dem ausgewählten Einzelbild der Kamera und dem 3D-Vorratsmodell, für jede mögliche Bewegung des abgeworfenen Vorrats in Bezug auf die gleichen Referenzachsen (8, 9) der Kamera- und Vorratspositionen,
f) Erhalten der Vorratskontur (2a) aus jedem der synthetischen 3D-Bilder (5), um verarbeitete synthetische 3D-Bilder (6) zu erhalten,
g) Abgleichen jedes der verarbeiteten synthetischen 3D-Bilder (6) mit dem verarbeiteten reellen Bild (4),
h) Auswählen des am besten passenden verarbeiteten synthetischen 3D-Bildes (7),
i) Erhalten und Aufzeichnen sowohl der Raumposition als auch der Winkelposition des ausgewählten verarbeiteten synthetischen 3D-Bildes (7), um einen Punkt der Vorratsflugbahn zu erhalten,
j) Aktualisieren der Raum- und Winkelposition des Vorrats (2) aus der Raum- und Winkelposition des Vorrats in dem ausgewählten verarbeiteten synthetischen 3D-Bild (7).
k) Auswählen eines anderen Einzelbildes der Kamera, um ein anderes reelles Bild (3) zu erhalten, und Zurückkehren zu Schritt d), bis eine festgelegte Stoppbedingung erreicht ist.

2. Verfahren zur Berechnung der Flugbahn eines aus einem Flugzeug (1) abgeworfenen Vorrats (2) nach Anspruch 1, wobei das Abgleichen jedes der verarbeiteten synthetischen 3D-Bilder (6) mit dem verarbeiteten reellen Bild (4) das Subtrahieren des verarbeiteten reellen Bildes (4) von jedem der erhaltenen verarbeiteten synthetischen 3D-Bilder umfasst, und wobei das Auswählen des am besten passenden verarbeiteten synthetischen 3D-Bildes (7) das Auswählen des verarbeiteten synthetischen 3D-Bildes (6) umfasst, dessen Subtraktion mit dem verarbeiteten reellen Bild (4) eine Mindestanzahl von Differenzpixeln erreicht hat.

3. Verfahren zur Berechnung der Flugbahn eines aus einem Flugzeug (1) abgeworfenen Vorrats (2) nach einem der vorstehenden Ansprüche, wobei das Erhalten der Konturen des reellen Bildes (3) und das Erhalten der Vorratskontur (2a) aus jedem der erzeugten synthetischen 3D-Bilder (5) das Umwandeln der beiden reellen Bilder (3) und des synthetischen 3D-Bildes (5) in Schwarzweißbilder umfasst, wobei Konturpixel auf Weiß gesetzt sind und die verbleibenden Pixel des Bildes auf Schwarz gesetzt sind, und wobei das Auswählen des am besten passenden verarbeiteten synthetischen 3D-Bildes (7) das Auswählen des verarbeiten synthetischen 3D-Bildes (6) umfasst, dessen Subtraktion mit dem verarbeiteten reellen Bild (4) eine Mindestanzahl von weißen Pixeln erreicht hat.

4. Verfahren zur Berechnung der Flugbahn eines aus einem Flugzeug (1) abgeworfenen Vorrats (2) nach einem der vorstehenden Ansprüche, wobei die Raumpositionen der Kamera und des Vorrats auf xyz Flugzeugreferenzachsen (8) bezogen sind, und wobei die Winkelpositionen der Kamera und des Vorrats auf Roll-Nick-Gier-Flugzeugreferenzwinkel (9) bezogen sind.

5. System zur Berechnung der Flugbahn eines aus einem Flugzeug (1) abgeworfenen Vorrats (2) mit:
• einer Kamera, die sich an einer bekannten Raum- und Winkelposition eines Flugzeugs (1) befindet, von wo aus Bilder eines abgeworfenen Vorrats (2) erhalten werden können, wobei die Kamera ein aus Einzelbildern gebildetes Videosignal liefert und intrinsische Kalibrierungsparameter aufweist,
• Verarbeitungsvorrichtung, die konfiguriert ist zum:
I) Bereitstellen eines 3D-Vorratsmodells an einer ursprünglich bekannten Raum- und Winkelposition des Vorrats (2),
m) Auswählen eines Einzelbildes des Videosignals der Kamera, um ein reelles Bild (3) zu erhalten,
n) Erhalten der Konturen des reellen Bildes (3), um ein verarbeitetes reelles Bild (4) zu erhalten,
o) Erzeugen eines synthetischen 3D-Bildes (5), aus den Raum- und Winkelpositionen der Kamera und des Vorrats, den Kamerakalibrierungsparametern, dem ausgewählten Einzelbild der Kamera und dem 3D-Vorratsmodell, für jede mögliche Bewegung des abgeworfenen Vorrats in Bezug auf die gleichen Referenzachsen (8, 9) der Kamera- und Vorratspositionen,
p) Erhalten der Vorratskontur (2a) aus jedem der synthetischen 3D-Bilder (5), um verarbeitete synthetische 3D-Bilder (6) zu erhalten,
q) Abgleichen jedes der verarbeiteten synthetischen 3D-Bilder (6) mit dem verarbeiteten reellen Bild (4),
r) Auswählen des am besten passenden verarbeiteten synthetischen 3D-Bildes (7),
s) Erhalten und Aufzeichnen sowohl der Raumposition als auch der Winkelposition des ausgewählten verarbeiteten synthetischen 3D-Bildes (7), um einen Punkt der Vorratsflugbahn zu erhalten,
t) Aktualisieren der Raum- und Winkelposition des Vorrats (2) aus der Raum- und Winkelposition des Vorrats in dem ausgewählten verarbeiteten synthetischen 3D-Bild (7).
u) Auswählen eines anderen Einzelbildes der Kamera, um ein anderes reelles Bild (3) zu erhalten, und Zurückkehren zu Schritt n), bis eine festgelegte Stoppbedingung erreicht ist.

6. System zur Berechnung der Flugbahn eines aus einem Flugzeug (1) abgeworfenen Vorrats (2) nach Anspruch 5, wobei die Verarbeitungsvorrichtung ferner konfiguriert ist zum:
- Subtrahieren des verarbeiteten reellen Bildes (4) von jedem verarbeiteten synthetischen 3D-Bild (6) beim Abgleichen des verarbeiteten reellen Bildes (4) mit jedem verarbeiteten synthetischen gefilterten 3D-Bild (6), und
- Auswählen des verarbeiteten synthetischen 3D-Bildes (6), dessen Subtraktion mit dem verarbeiteten reellen Bild (4) eine Mindestanzahl von Differenzpixeln erreicht hat, beim Auswählen des am besten passenden verarbeiteten synthetischen 3D-Bildes (7).

7. System zur Berechnung der Flugbahn eines aus einem Flugzeug (1) abgeworfenen Vorrats (2) nach einem der Ansprüche 5 und 6, wobei die Verarbeitungsvorrichtung ferner konfiguriert ist zum:
- Umwandeln der beiden reellen Bilder (3) und des synthetischen 3D-Bildes (5) in Schwarzweißbilder, wobei Konturpixel auf Weiß gesetzt sind und die verbleibenden Pixel des Bildes auf Schwarz gesetzt sind, beim Erhalten der Konturen des reellen Bildes (3) und der Vorratskontur (2a) jedes der synthetischen 3D-Bilder (5), und
- Auswählen des verarbeiten synthetischen 3D-Bildes (6), dessen Subtraktion mit dem verarbeiteten reellen Bild (4) eine Mindestanzahl von weißen Pixeln erreicht hat, als das am besten passenden verarbeitete synthetische 3D-Bild (7)

8. System zur Berechnung der Flugbahn eines aus einem Flugzeug (1) abgeworfenen Vorrats (2) nach einem der Ansprüche 5 bis 7, wobei die Raumpositionen der Kamera und des Vorrats auf xyz Flugzeugreferenzachsen (8) bezogen sind, und wobei die Winkelpositionen der Kamera und des Vorrats auf Roll-Nick-Gier-Flugzeugreferenzwinkel (9) bezogen sind.

## Revendications

1. Procédé pour calculer la trajectoire d'une charge externe (2) éjectée à partir d'un aéronef (1), comprenant les étapes suivantes :
a) la fourniture d'une caméra au niveau d'une position spatiale et angulaire connue d'un aéronef (1) à partir de laquelle des images d'une charge externe éjectée (2) peuvent être obtenues, ladite caméra fournissant un signal vidéo formé de trames, et ayant des paramètres d'étalonnage intrinsèques,
b) la fourniture d'un modèle de charge externe 3D au niveau d'une position spatiale et angulaire initialement connue de la charge externe (2),
c) la sélection d'une trame du signal vidéo de la caméra pour obtenir une image réelle (3),
d) l'obtention des contours de l'image réelle (3) pour obtenir une image réelle traitée (4),
e) la génération, à partir des positions angulaires et spatiales de caméra et de charge externe, des paramètres d'étalonnage de caméra, de la trame sélectionnée de la caméra et du modèle de charge externe 3D, d'une image synthétique 3D (5) pour chaque mouvement possible de la charge externe éjectée par rapport aux mêmes axes de référence (8, 9) de positions de caméra et de charge externe,
f) l'obtention du contour de charge externe (2a) à partir de chacune des images synthétiques 3D (5) pour obtenir des images synthétiques 3D traitées (6),
g) la mise en correspondance de chacune des images synthétiques 3D traitées (6) avec l'image réelle traitée (4),
h) la sélection de l'image synthétique 3D traitée correspondant le mieux (7),
i) l'obtention et l'enregistrement à la fois de la position spatiale et angulaire de l'image synthétique 3D traitée sélectionnée (7) pour obtenir un point de la trajectoire de charge externe,
j) la mise à jour de la position spatiale et angulaire de la charge externe (2) à partir de la position spatiale et angulaire de la charge externe dans l'image synthétique 3D traitée sélectionnée (7),
k) la sélection d'une autre trame de la caméra pour obtenir une autre image réelle (3) et le retour à d) jusqu'à ce qu'une condition d'arrêt établie soit atteinte.

2. Procédé pour calculer la trajectoire d'une charge externe (2) éjectée à partir d'un aéronef (1) selon la revendication 1, dans lequel la mise en correspondance de chacune des images synthétiques 3D traitées (6) avec l'image réelle traitée (4) comprend la soustraction de l'image réelle traitée (4) de chacune des images synthétiques 3D traitées (6) obtenues, et dans lequel la sélection de l'image synthétique 3D traitée correspondant le mieux (7) comprend la sélection de l'image synthétique 3D traitée (6) dont la soustraction avec l'image réelle traitée (4) a obtenu un nombre minimal de pixels différentiels.

3. Procédé pour calculer la trajectoire d'une charge externe (2) éjectée à partir d'un aéronef (1) selon l'une quelconque des revendications précédentes, dans lequel l'obtention des contours de l'image réelle (3) et l'obtention du contour de charge externe (2a) à partir de chacune des images synthétiques 3D générées (5) comprend la conversion à la fois de ladite image réelle (3) et de ladite image synthétique 3D (5) en images en noir et blanc dans lesquelles des pixels de contour sont mis en blanc et les pixels restants de l'image sont mis en noir, et dans lequel la sélection de l'image synthétique 3D traitée correspondant le mieux (7) comprend la sélection de l'image synthétique 3D traitée (6) dont la soustraction avec l'image réelle traitée (4) a obtenu un nombre minimal de pixels blancs.

4. Procédé pour calculer la trajectoire d'une charge externe (2) éjectée à partir d'un aéronef (1) selon l'une quelconque des revendications précédentes, dans lequel les positions spatiales de caméra et de charge externe se réfèrent à des axes de référence d'aéronef xyz (8) et dans lequel les positions angulaires de caméra et de charge externe se réfèrent à des angles de référence d'aéronef de roulis, de tangage et de lacet (9).

5. Système pour calculer la trajectoire d'une charge externe (2) éjectée à partir d'un aéronef (1), comprenant :
- une caméra située au niveau d'une position spatiale et angulaire connue d'un aéronef (1) à partir de laquelle des images d'une charge externe éjectée (2) peuvent être obtenues, ladite caméra fournissant un signal vidéo formé de trames, et ayant des paramètres d'étalonnage intrinsèques,
- des moyens de traitement configurés pour :
1) fournir un modèle de charge externe 3D au niveau d'une position spatiale et angulaire initialement connue de la charge externe (2),
m) sélectionner une trame du signal vidéo de la caméra pour obtenir une image réelle (3),
n) obtenir les contours de l'image réelle (3) pour obtenir une image réelle traitée (4),
o) générer, à partir des positions angulaires et spatiales de caméra et de charge externe, des paramètres d'étalonnage de caméra, de la trame sélectionnée de la caméra et du modèle de charge externe 3D, une image synthétique 3D (5) pour chaque mouvement possible de la charge externe éjectée par rapport aux mêmes axes de référence (8, 9) de positions de caméra et de charge externe,
p) obtenir le contour de charge externe (2a) à partir de chacune des images synthétiques 3D (5) pour obtenir des images synthétiques 3D traitées (6),
q) mettre en correspondance chacune des images synthétiques 3D traitées (6) avec l'image réelle traitée (4),
r) sélectionner l'image synthétique 3D traitée correspondant le mieux (7),
s) obtenir et enregistrer à la fois la position spatiale et angulaire de l'image synthétique 3D traitée sélectionnée (7) pour obtenir un point de la trajectoire de charge externe,
t) mettre à jour la position spatiale et angulaire de la charge externe (2) à partir de la position spatiale et angulaire de la charge externe dans l'image synthétique 3D traitée sélectionnée (7),
u) sélectionner une autre trame de la caméra pour obtenir une autre image réelle (3) et retourner à n) jusqu'à ce qu'une condition d'arrêt établie soit atteinte.

6. Système pour calculer la trajectoire d'une charge externe (2) éjectée à partir d'un aéronef (1) selon la revendication 5, dans lequel les moyens de traitement sont configurés en outre pour :
- soustraire l'image réelle traitée (4) de chaque image synthétique 3D traitée (6), lors de la mise en correspondance de l'image réelle traitée (4) avec chaque image filtrée synthétique 3D traitée (6), et
- sélectionner l'image synthétique 3D traitée (6) dont la soustraction avec l'image réelle traitée (4) a obtenu un nombre minimal de pixels différentiels, lors de la sélection de l'image synthétique 3D traitée correspondant le mieux (7).

7. Système pour calculer la trajectoire d'une charge externe (2) éjectée à partir d'un aéronef (1) selon l'une quelconque des revendications 5 et 6, dans lequel les moyens de traitement sont configurés en outre pour :
- convertir à la fois de l'image réelle (3) et des images synthétiques 3D (5) en images en noir et blanc dans lesquelles des pixels de contour sont mis en blanc et les pixels restants de l'image sont mis en noir, lors de l'obtention des contours de l'image réelle (3) et du contour de charge externe (2a) de chacune des images synthétiques 3D (5), et
- sélectionner l'image synthétique 3D traitée (6) dont la soustraction avec l'image réelle traitée (4) a obtenu un nombre minimal de pixels blancs, comme l'image synthétique 3D traitée correspondant le mieux (7) .

8. Système pour calculer la trajectoire d'une charge externe (2) éjectée à partir d'un aéronef (1) selon l'une quelconque des revendications 5 à 7, dans lequel les positions spatiales de caméra et de charge externe se réfèrent à des axes de référence d'aéronef xyz (8) et dans lequel les positions angulaires de caméra et de charge externe se réfèrent à des angles de référence d'aéronef de roulis, de tangage et de lacet (9) .
